# EUROPEAN PATENT APPLICATION

(11) **EP 4 657 968 A1**
(43) Date of publication of application: **03.12.2025**
(21) Application number: 24746990.1
(22) Date of filing: 26.01.2024
(51) Int. Cl.: H04W 76/27

(54) **METHOD USED FOR WIRELESS COMMUNICATION, AND DEVICE**

(30) Priority: 29.01.2023 CN 202310088367
(71) Applicant: Apogee Networks, LLC, Dallas, TX 75201 (US)
(72) Inventor: CHEN, Yu, Shanghai 201206 (CN); ZHANG, Xiaobo, Shanghai 201206 (CN)
(74) Representative: Gunzelmann, Rainer
(86) International application number: PCT/CN2024/074177
(87) International publication number: WO 2024/156283

(57) **Abstract**

Disclosed in the present application are a method used for wireless communication, and a device. The method comprises: receiving at least one RRC information block, each RRC information block amongst the at least one RRC information block being used for configuring a cell group, and the application of any RRC information block amongst the at least one RRC information block depending on receiving a signaling other than the at least one RRC information block; receiving a second signaling, the second signaling being a signaling of a protocol layer below the RRC layer, and, in response to receiving the second signaling, applying the first RRC information block, the second signaling indicating the first RRC information block amongst the at least one RRC information block, the application of the first RRC information block not comprising random access, and the expiration of a first timer being used for determining that the first RRC information block fails to be applied. The present application may achieve better mobility management.

## Description

### Technical Field

The present application relates to a transmission method and apparatus in a wireless communication system, to mobility management, and in particular to reducing latency and avoiding communication interruption.

### Background Art

In the future, the application scenarios of a wireless communication system will become more and more diversified, and different application scenarios impose different performance requirements for the system. In order to meet the different performance requirements of various application scenarios, the 3GPP (3rd Generation Partner Project) RAN (Radio Access Network) #72nd plenary meeting decided to study the NR (New Radio) technology (or Fifth Generation, 5G), and the 3GPP RAN #75th plenary meeting approved an NR WI (Work Item) and started the standardization work on NR.

In communications, both LTE (Long Term Evolution) and 5G NR involve accurate reception of reliable information, an optimized energy efficiency ratio, determination of information validity, flexible resource allocation, a scalable system structure, efficient non-access layer information processing, low service interruption and drop rates, and support for low power consumption. This is of great significance to normal communication between base stations and user equipment, reasonable scheduling of resources, and balancing of system loads. It can be said to be the cornerstone of high throughput, meeting the communication needs of various services, improving spectrum utilization, and improving the quality of service. It is indispensable for eMBB (enhanced Mobile BroadBand), URLLC (Ultra Reliable Low Latency Communication) and eMTC (enhanced Machine Type Communication). At the same time, there are extensive demands in IIoT (Industrial Internet of Things), V2X (Vehicular to X), Device to Device, unlicensed spectrum communication, user communication quality monitoring, network planning optimization, NTNs (Non Terrestrial Networks), TNs (Terrestrial Networks), Dual connectivity systems, radio resource management and multi-antenna codebook selection, signaling design, neighbor management, service management, and beamforming. Information transmission methods are divided into broadcast and unicast. Both transmission methods are essential for 5G systems because they are very helpful in meeting the above demands. UE can connect to networks directly or through a relay.

As the scenarios and complexity of the systems continue to increase, higher requirements are put forward for reducing the interruption rate, reducing latency, enhancing reliability, enhancing system stability, service flexibility, and power saving. At the same time, the compatibility between different versions and different systems also needs to be considered during system design.

The meanings of the concepts, terminologies and abbreviations in the present application can refer to 3GPP standards, including but not limited to:
https://www.3gpp.org/ftp/Specs/archive/21_series/21.905/21905-h10.zip
https://www.3gpp.org/ftp/Specs/archive/38_series/38.300/38300-h10.zip
https://www.3gpp.org/ftp/Specs/archive/38_series/38.331/38331-h10.zip
https://www.3gpp.org/ftp/Specs/archive/38_series/38.321/38321-h10.zip
https://www.3gpp.org/ftp/Specs/archive/38_series/38.304/38304-h10.zip

### Summary of the Invention

Researchers discovered that in scenarios where an RRC information block is applied, the expiration of a timer can be used for determining that the RRC information block fails to be applied. The timer needs to be stopped at an appropriate time, such as when the RRC information block is successfully applied, including, for example, when information that can be used for determining that the information block is successfully applied is received, otherwise, the timer will expire. After the expiration of the timer, it may be mistakenly considered that the RRC information block fails to be applied, resulting in a problem and even disconnection. Thus, how to use the timer when the RRC information block is applied is a problem that needs to be solved. Researchers also discovered that the timer in mobility management has an important function. Successful application of the RRC information block implies a successful cell handover or cell switch, and the timer can be used for determining whether the handover is successful or whether the cell switch is successful. Researchers also discovered that the mobility management comprises the cell handover and/or the cell switch. In traditional cell handover, a control method based on layer 3 (L3), namely an RRC (Radio Resource Control) signaling, is adopted, that is, optionally, a terminal reports an L3 measurement result, a network selects an appropriate target cell according to the measurement result and sends an RRC signaling for indicating the handover to the target cell, and the terminal executes the RRC signaling for the handover. The execution process generally includes determining the target cell, applying a configuration of the target cell, synchronizing with the target cell, initiating random access, and sending a message of the completion of the handover. The entire handover process relates to: interpretation and execution of a signaling, downlink synchronization, uplink synchronization, and completion of remaining handover steps. Generally speaking, this takes tens of milliseconds to one or two hundred milliseconds. The impact on services that are sensitive to latency requirements is relatively large. For some services, if the latency exceeds 20 milliseconds, the quality of service will be significantly reduced. In 5G, cells are getting smaller and smaller, handover is becoming more frequent, and supported services are becoming more abundant. The problem of reduction of the quality of service caused by handover latency deserves attention. Researchers also discovered that a feasible solution is to use, optionally, a measurement result of a lower layer, namely an L1 physical layer, and use a signaling of a lower layer, such as a physical layer or MAC layer, to indicate the handover. Combined with some pre-configured RRC information blocks and, optionally, measures such as terminal pre-synchronization, latency of handover can be greatly reduced. This type of handover, also known as cell switch or L1L2 triggered mobility (LTM), has relatively short latency. In some scenarios, the target cell of the handover is already synchronized with the current cell, for example, if they are in the same timing advance group, the UE is also synchronized with the target cell of the handover. Alternatively, the UE has performed a synchronization process in advance or achieved synchronization by means of an indication of a network. In short, there is no need to use a random access process to complete synchronization. The timer in mobility management can be stopped when random access is successfully completed. However, if the random access process is not used, the timer in mobility management may fail to be stopped in a timely manner, resulting in errors, which needs to be solved urgently.

In response to the above problems, the present application provides a solution.

It should be noted that, in the absence of conflicts, embodiments and features in the embodiments of any node of the present application may be applied to any other node. In the absence of conflicts, the embodiments and features in the embodiments of the present application may be arbitrarily combined with each other. At the same time, the method proposed in the present application can also be used to solve other problems in communication.

The present application discloses a method used in a first node for wireless communication, comprising:
receiving at least one RRC information block, each RRC information block amongst the at least one RRC information block being used for configuring one cell group, and the application of any RRC information block amongst the at least one RRC information block depending on receiving a signaling other than the at least one RRC information block;
receiving a second signaling, the second signaling being a signaling of a protocol layer below an RRC layer; in response to receiving the second signaling, applying a first RRC information block, the second signaling indicating the first RRC information block amongst the at least one RRC information block, and the application of the first RRC information block not comprising random access; and accompanied by the reception of the second signaling, starting a first timer, a stopping of the first timer depending on receiving first information, the first information being generated by the protocol layer below the RRC layer, and the reception of the first information being used for determining that the first RRC information block is successfully applied,
wherein the expiration of the first timer is used for determining that the first RRC information block fails to be applied.

As one embodiment, the problems to be solved by the present application comprise: how to use the timer, how to stop the timer, how to properly use the timer in the scenario of RRC information block application triggered by an L1L2 signaling, how to coordinate signalings of different protocol layers and reduce signaling application latency, allowing the application of the signaling to be more coordinated, and how to accurately and timely determine whether one RRC information block is successfully applied.

As one embodiment, the benefits of the above method comprise: more flexibility, conduciveness to reducing the latency of the RRC information block application, ensured quality of service, ensured service continuity, and avoidance of interruption. Whether the RRC information block is successfully applied can be determined in a timely manner; and misoperation is prevented, signaling overhead is reduced, and signaling efficiency is improved.

Specifically, according to one aspect of the present application, a first transmitter sends a first measurement result, wherein the first measurement result is an L1 measurement result; and
the first transmitter sends first acknowledgment information, the first acknowledgment information being used for indicating that the first RRC information block is applied,
wherein the behavior of sending the first measurement result is performed before receiving the second signaling; and the behavior of sending the first acknowledgment information is performed after receiving the second signaling.

Specifically, according to one aspect of the present application, the first receiver receives a third signaling, the third signaling being a signaling of the protocol layer below the RRC layer; in response to receiving the third signaling, applying a second RRC information block, the third signaling indicating the second RRC information block amongst the at least one RRC information block, and the application of the second RRC information block comprising triggering random access; and accompanied by the reception of the third signaling, starting the first timer, in response to successful completion of random access to a cell in the cell group configured by the second RRC information block, stopping the first timer.

Specifically, according to one aspect of the present application, the expiration of the first timer does not trigger RRC reestablishment.

Specifically, according to one aspect of the present application, the at least one RRC information block is used for indicating whether the expiration of the first timer triggers RRC reestablishment.

Specifically, according to one aspect of the present application, in response to the expiration of the first timer, a first processor applies one RRC information block of the at least one RRC information block to start the first timer.

Specifically, according to one aspect of the present application, in response to the expiration of the first timer, the first processor falls back to a configuration before applying the first RRC information block.

Specifically, according to one aspect of the present application, the phrase "falling back to a configuration before applying the first RRC information block" does not comprise releasing a signaling radio bearer, discarding keys, or falling back to a previous PDCP state variable for a DRB, and the phrase "falling back to a configuration before applying the first RRC information block" comprises at least partially resetting MAC.

Specifically, according to one aspect of the present application, the phrase "falling back to a configuration before applying the first RRC information block" does not comprise releasing or reestablishing an RLC entity.

Specifically, according to one aspect of the present application, the first node is an Internet of Things terminal.

Specifically, according to one aspect of the present application, the first node is user equipment.

Specifically, according to one aspect of the present application, the first node is a relay.

Specifically, according to one aspect of the present application, the first node is an access network device.

Specifically, according to one aspect of the present application, the first node is a vehicle-mounted terminal.

Specifically, according to one aspect of the present application, the first node is an aircraft.

Specifically, according to one aspect of the present application, the first node is a mobile phone.

The present application discloses a first node used for wireless communication, comprising:
a first receiver, receiving at least one RRC information block, each RRC information block amongst the at least one RRC information block being used for configuring one cell group, and the application of any RRC information block amongst the at least one RRC information block depending on receiving a signaling other than the at least one RRC information block;
the first receiver, receiving a second signaling, the second signaling being a signaling of a protocol layer below an RRC layer; in response to receiving the second signaling, applying a first RRC information block, the second signaling indicating the first RRC information block amongst the at least one RRC information block, and the application of the first RRC information block not comprising random access; and accompanied by the reception of the second signaling, starting a first timer, a stopping of the first timer depending on receiving first information, the first information being generated by the protocol layer below the RRC layer, and the reception of the first information being used for determining that the first RRC information block is successfully applied,
wherein the expiration of the first timer is used for determining that the first RRC information block fails to be applied successfully.

As one embodiment, compared with the traditional solution, the present application has the following advantages:
supporting a fast handover process within the same CU (Control Unit), especially within the same DU (Data Unit), which may also be referred to as cell switch;
reducing the latency of handover;
ensuring the continuity of data in a handover process;
minimizing the impact of handover on data transmission;
supporting L1L2 mobility management;
avoiding the communication interruption;
reducing the impact of radio link failure on communication;
helping to optimize the network;
reducing handover failure; and
reducing the possibility of ping-pong handover.

### Brief Description of the Drawings

Other features, purposes and advantages of the present application will become more apparent from reading the detailed description of the non-limiting embodiments made with reference to the following drawings:
FIG. 1 shows a flowchart of receiving at least one RRC information block, receiving a second signaling, and applying a first RRC information block according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of radio signal transmission according to one embodiment of the present application;
FIG. 6 shows a schematic diagram of LTM according to one embodiment of the present application;
FIG. 7 shows a schematic diagram of reception of first information being used for determining that a first RRC information block is successfully applied according to one embodiment of the present application;
FIG. 8 shows a schematic diagram of expiration of a first timer being used for determining that a first RRC information block fails to be applied according to one embodiment of the present application;
FIG. 9 shows a schematic diagram of first acknowledgment information being used for indicating that a first RRC information block is applied according to one embodiment of the present application; and
FIG. 10 illustrates a schematic diagram of a processing apparatus used in a first node according to one embodiment of the present application.

### Detailed Description of Embodiments

The technical solution of the present application will be further described in detail below in conjunction with the accompanying drawings. It should be noted that, in the case of no conflict, embodiments and features in the embodiments of the present application may be arbitrarily combined with each other.

### Embodiment 1

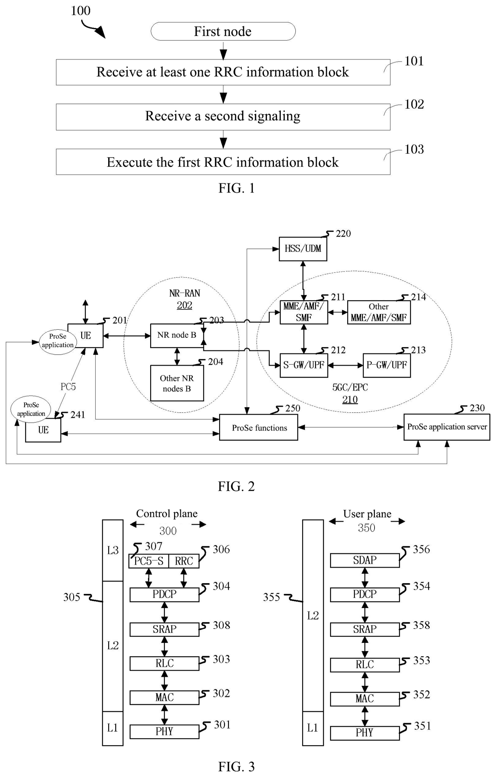

FIG. 1 illustrates a flowchart of receiving at least one RRC information block, receiving a second signaling, and applying a first RRC information block according to one embodiment of the present application, as shown in FIG. 1. In FIG. 1, each block represents one step, and it should be particularly emphasized that the order of the blocks in the figure does not represent the chronological relationship between the steps represented.

In Embodiment 1, a first node in the present application receives at least one RRC information block in step 101; receives the second signaling in step 102; and applies a first RRC information block in step 103,
wherein each RRC information block amongst the at least one RRC information block is used for configuring one cell group; the application of any RRC information block amongst the at least one RRC information block depends on receiving a signaling other than the at least one RRC information block; and the second signaling is a signaling of a protocol layer below an RRC layer. The first node, in response to receiving the second signaling, applies a first RRC information block, the second signaling indicating the first RRC information block amongst the at least one RRC information block, and the application of the first RRC information block not comprising random access; and accompanied by the reception of the second signaling, starts a first timer, a stopping of the first timer depending on receiving first information, and the first information being generated by the protocol layer below the RRC layer, and the reception of the first information being used for determining that the first RRC information block is successfully applied, wherein the expiration of the first timer is used for determining that the first RRC information block fails to be applied successfully.

As one embodiment, the first node is UE (User Equipment).

As one embodiment, the first node is in an RRC connected state.

As one embodiment, any parameter in the present application is either configured by the network or may be generated by the first node according to an internal algorithm, such as randomly.

As one embodiment, the present application is for an NR.

As one embodiment, the present application is for wireless communication networks after an NR.

As one embodiment, a serving cell refers to a cell where UE resides. Executing cell search comprises UE searching for one suitable cell of a selected PLMN (Public Land Mobile Network) or SNPN (Stand-alone Non-public Network), selecting the one suitable cell to provide available services, and monitoring a control channel of the one suitable cell. This process is defined as residing on a cell; that is, one cell that is resided on is a serving cell of the UE relative to the UE. Residing on one cell in an RRC idle state or an RRC inactive state has the following benefits: it allows UE to receive system messages from the PLMN or SNPN; after registration, if UE desires to establish an RRC connection or continue one suspended RRC connection, UE may do so by executing initial access on the control channel of the cell where it resides; the network may page UE; and it allows UE to receive notifications from an ETWS (Earthquake and Tsunami Warning System) and a CMAS (Commercial Mobile Alert System).

As one embodiment, for UE in an RRC connected state not configured with CA/DC (Carrier Aggregation/Dual Connectivity), there is only one serving cell comprising a primary cell. For UE in the RRC connected state configured with CA/DC (Carrier Aggregation/Dual Connectivity), the serving cell is used for indicating a cell set comprising an SpCell (Special Cell) and all secondary cells. The primary cell is an MCG (Master Cell Group) cell, which operates on a primary frequency. and UE executes an initial connection establishment process or initiates connection reestablishment on the primary cell. For a dual connectivity operation, the special cell refers to a PCell (Primary Cell) of an MCG or a PSCell (Primary SCG Cell) of an SCG (Secondary Cell Group); and if it is not a dual connectivity operation, the special cell refers to a PCell.

As one embodiment, a frequency at which an SCell (Secondary Cell) operates is a secondary frequency.

As one embodiment, individual content of an information element is referred to as a field.

As one embodiment, MR-DC (Multi-Radio Dual Connectivity) refers to dual connectivity of E-UTRA and NR nodes, or dual connectivity between two NR nodes.

As one embodiment, in MR-DC, a radio access node that provides a control plane connection to a core network is a master node, and the master node may be a master eNB, a master ng-eNB, or a master gNB.

As one embodiment, an MCG refers to a group of serving cells associated with the master node in MR-DC, which comprises an SpCell, and may also, optionally, comprise one or more SCells.

As one embodiment, a PCell is an SpCell of an MCG.

As one embodiment, a PSCell is an SpCell of an SCG.

As one embodiment, in MR-DC, a radio access node that does not provide a control plane connection to a core network and provides additional resources to UE is a secondary node. The secondary node may be an en-gNB, a secondary ng-eNB, or a secondary gNB.

As one embodiment, in MR-DC, a group of serving cells associated with the secondary node is an SCG (Secondary Cell Group), comprising an SpCell and, optionally, one or more SCells.

As one embodiment, the SpCell is a PCell or the SpCell is a PSCell.

As one embodiment, the RRC information block refers to an information element in an RRC message.

As one embodiment, one RRC information block may comprise one or more RRC information blocks.

As one embodiment, one RRC information block may not comprise any RRC information block, but only comprises at least one parameter.

As one embodiment, the at least one RRC information block comprises only one RRC information block.

As one embodiment, the at least one RRC information block comprises a plurality of RRC information blocks.

As one embodiment, the at least one RRC information block comprises at least one information block in an RRCReconfiguration message.

As one embodiment, the at least one RRC information block comprises only one information block in an RRCReconfiguration message.

As one embodiment, the at least one RRC information block is carried by one RRC message.

As one embodiment, the at least one RRC information block is carried by one RRCReconfiguration message.

As one embodiment, each RRC information block amongst the at least one RRC information block is carried by one RRCReconfiguration message.

As one embodiment, the at least one RRC information block is or comprises CellGroupConfig.

As one embodiment, the at least one RRC information block forms a list of RRC information blocks.

As one sub-embodiment of this embodiment, a name of the list comprises AddMod.

As one embodiment, the meaning of the phrase "each RRC information block amongst the at least one RRC information block being used for configuring one cell group" comprises: each RRC information block amongst the at least one RRC information block comprises at least CellGroupConfig.

As one embodiment, a plurality of RRC information in the phrase "the at least one RRC information block" can be used for configuring the same cell group.

As one sub-embodiment of this embodiment, the phrase "configuring the same cell" means that SpCells comprised in the configured cells are the same, but the configuration parameters of the cell group are different.

As one sub-embodiment of this embodiment, the phrase "configuring the same cell" means that SpCells and SCells comprised in configured cells are the same, but the configuration parameters of the cell group are different.

As a sub-embodiment of this embodiment, the configuration parameters of the cell group comprise at least one parameter, such as a time-frequency resource, for example, a value of a timer.

As one embodiment, the meaning of the phrase" each RRC information block amongst the at least one RRC information block being used for configuring one cell group" comprises: each RRC information block amongst the at least one RRC information block is used for configuring an SpCell of one cell group.

As one embodiment, the one cell group is either for a primary cell group or a candidate primary cell group, or for a secondary cell group or a candidate secondary cell group.

As one embodiment, the meaning of the phrase "each RRC information block amongst the at least one RRC information block being used for configuring one cell group" comprises: each RRC information block amongst the at least one RRC information block is used for configuring a value of at least one timer of one cell group.

As one embodiment, the meaning of the phrase "each RRC information block amongst the at least one RRC information block being used for configuring one cell group" comprises: each RRC information block amongst the at least one RRC information block is used for configuring a random access resource of one cell group.

As one embodiment, the meaning of the phrase "each RRC information block amongst the at least one RRC information block being used for configuring one cell group" comprises: each RRC information block amongst the at least one RRC information block is used for configuring a reference signal resource of one cell group.

As one embodiment, the meaning of the phrase "each RRC information block amongst the at least one RRC information block being used for configuring one cell group" comprises: each RRC information block amongst the at least one RRC information block is used for configuring a value of a first timer of one cell group.

As one embodiment, the meaning of the phrase "each RRC information block amongst the at least one RRC information block being used for configuring one cell group" comprises: each RRC information block amongst the at least one RRC information block is used for configuring an RLC bearer or an RLC entity of one cell group.

As one embodiment, the meaning of the phrase "each RRC information block amongst the at least one RRC information block being used for configuring one cell group" comprises: each RRC information block amongst the at least one RRC information block is used for configuring MAC of one cell group.

As one embodiment, the meaning of the phrase "each RRC information block amongst the at least one RRC information block being used for configuring one cell group" comprises: each RRC information block amongst the at least one RRC information block is used for configuring an identity or index of one cell group.

As one embodiment, the meaning of the phrase "each RRC information block amongst the at least one RRC information block being used for configuring one cell group" comprises: each RRC information block amongst the at least one RRC information block is used for configuring an SCell of one cell group.

As one embodiment, the meaning of the phrase "each RRC information block amongst the at least one RRC information block being used for configuring one cell group" comprises: each RRC information block amongst the at least one RRC information block is used for configuring a reconfigurationWithSync (Synchronous Reconfiguration) of the SpCell of one cell group.

As one embodiment, the meaning of the phrase "each RRC information block amongst the at least one RRC information block being used for configuring one cell group" comprises: each RRC information block amongst the at least one RRC information block is used for configuring measurement parameters and/or parameters for mobility management of one cell group.

As one embodiment, the meaning of the sentence "the application of any RRC information block amongst the at least one RRC information block depends on receiving a signaling other than the at least one RRC information block" is or comprises: the at least one RRC information block does not comprise the signaling other than the at least one RRC information block; and an RRC message to which the at least one RRC information block belongs does not comprise the signaling other than the at least one RRC information block.

As one embodiment, the meaning of the sentence "the application of any RRC information block amongst the at least one RRC information block depends on receiving a signaling other than the at least one RRC information block" is or comprises: the signaling other than the at least one RRC information block is a signaling of a protocol layer below an RRC layer.

As one embodiment, the meaning of the sentence "the application of any RRC information block amongst the at least one RRC information block depends on receiving a signaling other than the at least one RRC information block" is or comprises: the signaling other than the at least one RRC information block is a signaling of an MAC layer.

As one embodiment, the meaning of the sentence "the application of any RRC information block amongst the at least one RRC information block depends on receiving a signaling other than the at least one RRC information block" is or comprises: the signaling other than the at least one RRC information block is a signaling of an MAC layer and a physical layer.

As one embodiment, the meaning of the sentence "the application of any RRC information block amongst the at least one RRC information block depends on receiving a signaling other than the at least one RRC information block" is or comprises: the signaling other than the at least one RRC information block is an MAC CE (Control Element).

As one embodiment, the meaning of the sentence "the application of any RRC information block amongst the at least one RRC information block depends on receiving a signaling other than the at least one RRC information block" is or comprises: the at least one RRC information block is not applied immediately after being received.

As one embodiment, the meaning of the sentence "the application of any RRC information block amongst the at least one RRC information block depends on receiving a signaling other than the at least one RRC information block" is or comprises: the at least one RRC information block is stored in a state variable first after being received.

As one embodiment, the meaning of the sentence "the application of any RRC information block amongst the at least one RRC information block depends on receiving a signaling other than the at least one RRC information block" is or comprises: the application of any RRC information block amongst the at least one RRC information block needs to be triggered.

As one embodiment, the meaning of the sentence "the application of any RRC information block amongst the at least one RRC information block depends on receiving a signaling other than the at least one RRC information block" is or comprises: if the signaling other than the at least one RRC information block fails to be received, none of the RRC information blocks amongst the at least one RRC information block is applied.

As one embodiment, the meaning of the sentence "the application of any RRC information block amongst the at least one RRC information block depends on receiving a signaling other than the at least one RRC information block" is or comprises: if the signaling other than the at least one RRC information block is received, one or at least one RRC information block amongst the at least one RRC information block is applied.

As one embodiment, the meaning of the sentence "the application of any RRC information block amongst the at least one RRC information block depends on receiving a signaling other than the at least one RRC information block" is or comprises: the application of any RRC information block amongst the at least one RRC information block depends on receiving a signaling other than the at least one RRC information block only when no RRC information block amongst the at least one RRC information block fails to be applied.

As one embodiment, the meaning of the sentence "the application of any RRC information block amongst the at least one RRC information block depends on receiving a signaling other than the at least one RRC information block" is or comprises: the application of any RRC information block amongst the at least one RRC information block depends on receiving a signaling other than the at least one RRC information block only when the first timer is not expired.

As one embodiment, the meaning of the sentence "the application of any RRC information block amongst the at least one RRC information block depends on receiving a signaling other than the at least one RRC information block" is or comprises: the application of any RRC information block amongst the at least one RRC information block depends on receiving a signaling other than the at least one RRC information block when no RRC information block amongst the at least one RRC information block is applied.

As one embodiment, the meaning of the sentence "the application of any RRC information block amongst the at least one RRC information block depends on receiving a signaling other than the at least one RRC information block" is or comprises: the application of any RRC information block amongst the at least one RRC information block depends on receiving a signaling other than the at least one RRC information block when no RRC information block amongst the at least one RRC information block is attempted to be applied.

As one embodiment, the meaning of the sentence "the application of any RRC information block amongst the at least one RRC information block depends on receiving a signaling other than the at least one RRC information block" is or comprises: for the first RRC information block to be applied amongst the at least one RRC information block, the application of any RRC information block amongst the at least one RRC information block depends on receiving a signaling other than the at least one RRC information block.

As one embodiment, the meaning of the sentence "the application of any RRC information block amongst the at least one RRC information block depends on receiving a signaling other than the at least one RRC information block" is or comprises: after the last successful execution of LTM, for the first RRC information block to be applied amongst the at least one RRC information block, the application of any RRC information block amongst the at least one RRC information block depends on receiving a signaling other than the at least one RRC information block.

As one embodiment, the meaning of the sentence "the application of any RRC information block amongst the at least one RRC information block depends on receiving a signaling other than the at least one RRC information block" is or comprises: in case where no LTM failure occurs in the at least one RRC information block, the application of any RRC information block amongst the at least one RRC information block depends on receiving a signaling other than the at least one RRC information block.

As one embodiment, the second signaling is the signaling other than the at least one RRC information block.

As one embodiment, the second signaling is the MAC CE.

As one embodiment, the second signaling is the MAC CE and DCI (Downlink Control Information).

As one sub-embodiment of this embodiment, the meaning of the phrase "the second signaling is the MAC CE and DCI" is: the second signaling comprises both the MAC CE and DCI.

As one embodiment, after receiving the second signaling, the MAC layer of the first node sends an indication to the RRC layer of the first node.

As one sub-embodiment of this embodiment, the indication comprises that the second signaling has been received.

As one sub-embodiment of this embodiment, the indication comprises that the second signaling has been received, and the second signaling indicates to apply the first RRC information block.

As one sub-embodiment of this embodiment, the indication comprises a request or a need to apply the first RRC information block.

As one embodiment, the meaning of the phrase "in response to receiving the second signaling, applying a first RRC information block" is: the reception of the second signaling triggers the application of the first RRC information block.

As one embodiment, the meaning of the phrase "applying a first RRC information block" comprises: executing the first RRC information block.

As one embodiment, the meaning of the phrase "applying a first RRC information block" comprises: applying the parameters and/or configurations in the first RRC information block.

As one embodiment, the meaning of the phrase "applying a first RRC information block" comprises: saving the current configuration and applying the configuration indicated by the first RRC information block.

As one embodiment, the meaning of the phrase "applying a first RRC information block" comprises: applying each parameter indicated by the first RRC information block.

As one embodiment, applying a first RRC information block comprises stopping at least one timer other than the first timer.

As one embodiment, applying a first RRC information block comprises stopping or restarting the first timer.

As one embodiment, the second signaling is generated by a protocol layer below the RRC layer.

As one embodiment, the second signaling is not an RRC signaling.

As one embodiment, the meaning of the phrase "the second signaling indicating the first RRC information block amongst the at least one RRC information block" is or comprises: the second signaling explicitly indicates which one amongst the at least one RRC information block is the first RRC information block.

As one embodiment, the meaning of the phrase "the second signaling indicating the first RRC information block amongst the at least one RRC information block" is or comprises: the second signaling comprises a first identity, and the first identity is an identity of one RRC information block amongst the at least one RRC information block.

As one sub-embodiment of this embodiment, the first identity is one configuration identity.

As one sub-embodiment of this embodiment, the first identity is an index.

As one sub-embodiment of this embodiment, the first identity is a first identity indicated by the second signaling.

As one sub-embodiment of this embodiment, the first identity is a priority identity indicated by the second signaling.

As one sub-embodiment of this embodiment, the first identity is one configuration index.

As one sub-embodiment of this embodiment, the first identity is an index of the RRC information block amongst the at least one RRC information block.

As one sub-embodiment of this embodiment, the information block comprising the first identity amongst the at least one RRC information block is determined as the first RRC information block.

As one sub-embodiment of this embodiment, each RRC information block amongst the at least one RRC information block comprises one identity.

As one sub-embodiment of this embodiment, only one RRC information block amongst the at least one RRC information block comprises the first identity, and the only one RRC information block is the first information block.

As one sub-embodiment of this embodiment, each RRC information block amongst the at least one RRC information block is associated with one identity, and an RRC information block associated with the first identity amongst the at least one RRC information block is determined to be the first RRC information block.

As one sub-embodiment of this embodiment, each RRC information block amongst the at least one RRC information block has a mapping relationship with one identity, and an RRC information block having a mapping relationship with the first identity amongst the at least one RRC information block is determined to be the first RRC information block.

As one embodiment, the meaning of the phrase "the application of the first RRC information block not comprising random access" is or comprises: the application of the first RRC information block does not involve and/or does not require random access.

As one embodiment, the meaning of the phrase "the application of the first RRC information block not comprising random access" is or comprises: the application of the first RRC information block is not accompanied by random access.

As one embodiment, the meaning of the phrase "the application of the first RRC information block not comprising random access" is or comprises: the application of the first RRC information block triggers random access.

As one embodiment, the meaning of the phrase "the application of the first RRC information block not comprising random access" is or comprises: the first RRC information block indicates that random access is not to be used.

As one embodiment, the meaning of the phrase "the application of the first RRC information block not comprising random access" is or comprises: the first RRC information block indicates RACH-less.

As one embodiment, the meaning of the phrase "the application of the first RRC information block not comprising random access" is or comprises: the first RRC information block does not indicate a random access resource.

As one embodiment, the meaning of the phrase "the application of the first RRC information block not comprising random access" is or comprises: the first RRC information block is used for cell switch, and when the cell group configured by the first RRC information block is applied as a primary cell group or a secondary cell group, there is no need to perform random access on the target cell configured by the first RRC information block.

As one sub-embodiment of this embodiment, the target cell is an SpCell of the cell group configured by the first RRC information block.

As one embodiment, the meaning of the phrase "the application of the first RRC information block not comprising random access" is or comprises: whether the first RRC information block is successfully applied does not depend on initiating random access.

As one embodiment, the meaning of the phrase "the application of the first RRC information block not comprising random access" is or comprises: whether the first RRC information block is successfully applied does not depend on completing random access.

As one embodiment, the meaning of the phrase sentence "the reception of the second signaling starts a first timer" is or comprises: when the second signaling is received, the first timer will definitely be started.

As one embodiment, the meaning of the phrase sentence "the reception of the second signaling starts a first timer" is or comprises: the second signaling triggers the starting of the first timer.

As one embodiment, the meaning of the phrase sentence "the reception of the second signaling starts a first timer" is or comprises: the second signaling triggers the application of the first RRC information block, and the application of the first RRC information block comprises starting the first timer.

As one embodiment, the meaning of the phrase sentence "the reception of the second signaling starts a first timer" is or comprises: the second signaling triggers the application of the first RRC information block, and the application of the first RRC information block triggers the starting of the first timer.

As one embodiment, the meaning of the phrase sentence "the reception of the second signaling starts a first timer" is or comprises: the second signaling triggers the application of the first RRC information block, and the application of ReconfigurationWithSync comprised in the first RRC information block comprises or triggers the starting of the first timer.

As one embodiment, the meaning of the phrase sentence "the reception of the second signaling starts a first timer" is or comprises: the first timer is started after the second signaling is received.

As one embodiment, the first timer is a timer of the RRC layer.

As one embodiment, a value of the first timer is configured by the first RRC information block.

As one embodiment, a value of the first timer is determined based on implementation.

As one embodiment, a value of the first timer is fixed.

As one embodiment, a value of the first timer is predefined.

As one embodiment, a value of the first timer is indicated by the second signaling.

As one embodiment, a value of the first timer is 20ms.

As one embodiment, the first timer is a T304 timer.

As one embodiment, the first timer is a T304a timer.

As one embodiment, the first timer is a timer of the MAC layer.

As one embodiment, the name of the first timer comprises ltm.

As one embodiment, each configuration identity indicated by the second signaling corresponds to an instance of the first timer.

As one embodiment, each RRC information block amongst the at least one RRC information block corresponds to an instance of the first timer.

As one embodiment, the meaning of the sentence "a stopping of the first timer depends on receiving first information" is or comprises: after the first timer is started, if the first information is not received, the first timer will expire.

As one embodiment, the meaning of the sentence "a stopping of the first timer depends on receiving first information" is or comprises: after the first timer is started, if the first information is received, the first timer is stopped.

As one embodiment, the first information is a signaling.

As one embodiment, the first information is or comprises an MAC SDU (Service Data Unit).

As one embodiment, the first information is or comprises an MAC CE.

As one sub-embodiment of this embodiment, the size of the MAC CE is 0.

As one sub-embodiment of this embodiment, the MAC CE uses a specified logical channel identity.

As one sub-embodiment of this embodiment, the size of the MAC CE is greater than 0.

As one embodiment, the first information is or comprises a signal on a PDCCH (Physical Downlink Control Channel).

As one embodiment, the first information is one field in the MAC CE or DCI.

As one embodiment, the first information occupies 1 bit.

As one embodiment, the first information occupies a plurality of bits.

As one embodiment, the first information is or comprises DCI.

As one embodiment, the first information is or comprises an HARQ (Hybrid Automatic Repeat reQuest ACK).

As one sub-embodiment of this embodiment, the HARQ ACK is for a signal sent by the first node.

As one sub-embodiment of this embodiment, the HARQ ACK is for one uplink HARQ process or one uplink HARQ process number.

As one embodiment, the benefits of the above method comprise that determining the successful application of the first RRC information block by explicitly receiving the first information is clearer and reliable, and at the same time, compared with the traditional handover method, the above method is faster.

As one embodiment, the meaning of the phrase "failing to successfully apply the one RRC information block amongst the at least one RRC information block" is: failing to successfully apply at least one field in the one RRC information block amongst the at least one RRC information block.

As one embodiment, the meaning of the phrase "failing to successfully apply the one RRC information block amongst the at least one RRC information block" is: failing to successfully apply a ReconfigurationWithSync field in the one RRC information block amongst the at least one RRC information block.

As one embodiment, the meaning of the phrase "failing to successfully apply the one RRC information block amongst the at least one RRC information block" is: failing to apply a ReconfigurationWithSync field in the one RRC information block amongst the at least one RRC information block.

As one embodiment, the expiration of the first timer does not trigger RRC reestablishment.

As one embodiment, the expiration of the first timer is considered to be a handover failure, but does not trigger RRC reestablishment.

As one embodiment, the expiration of the first timer is considered to be a Reconfiguration With Sync failure, but does not trigger RRC reestablishment.

As one embodiment, the expiration of the first timer is considered to be a failure of one RRC information block application, but not an LTM or a cell handover failure.

As one embodiment, the expiration of the first timer is considered to be a failure of the second signaling execution, but not an LTM or a cell handover failure.

As one embodiment, the expiration of the first timer triggers a fallback to an original cell group.

As one sub-embodiment of this embodiment, the original cell group is a cell group that sends the second signaling.

As one sub-embodiment of this embodiment, the original cell group is a cell group that sends the at least one RRC information block.

As one sub-embodiment of this embodiment, the original cell group is a primary cell group or a secondary cell group of the first node at the time of receiving the second signaling.

As one sub-embodiment of this embodiment, when the first RRC information block is used for configuring a primary cell group, the original cell group is a primary cell group of the first node at the time of receiving the second signaling; and when the first RRC information block is used for configuring a secondary cell group, the original cell group is a secondary cell group of the first node at the time of receiving the second signaling.

As one embodiment, the expiration of the first timer triggers a fallback to an original cell.

As one sub-embodiment of this embodiment, the original cell is a source cell.

As one sub-embodiment of this embodiment, the original cell is a cell that sends the second signaling.

As one sub-embodiment of this embodiment, the original cell is a cell that sends the at least one RRC information block.

As one sub-embodiment of this embodiment, the original cell is an SpCell of the first node at the time of receiving the second signaling.

As one sub-embodiment of this embodiment, when the first RRC information block is used for configuring a primary cell group, the original cell is a PCell of the first node at the time of receiving the second signaling; and when the first RRC information block is used for configuring a secondary cell group, the original cell is a PSCell of the first node at the time of receiving the second signaling.

As one embodiment, the phrase "falling back to a configuration before applying the first RRC information block" does not comprise releasing a signaling radio bearer.

As a sub-embodiment of this embodiment, the meaning of "not comprising releasing a signaling radio bearer" is that an SRB (Signaling Radio Bearer) of the first node is maintained.

As one embodiment, the phrase "falling back to a configuration before applying the first RRC information block" does not comprise discarding keys.

As one sub-embodiment of this embodiment, the keys are those used for encryption and integrity protection.

As one sub-embodiment of this embodiment, the keys are used for encrypting signaling and data.

As one sub-embodiment of this embodiment, a secure connection is established between the first node and the network.

As one embodiment, the phrase "falling back to a configuration before applying the first RRC information block" does not comprise falling back to a previous PDCP state variable for a DRB.

As one sub-embodiment of this embodiment, one DRB corresponds to one PDCP entity.

As one sub-embodiment of this embodiment, the PDCP state variable is a state variable of one PDCP entity.

As one sub-embodiment of this embodiment, the meaning of "PDCP for a DRB" is the PDCP entity associated with the DRB.

As one embodiment, the phrase "falling back to a configuration before applying the first RRC information block" comprises at least partially resetting MAC.

As one sub-embodiment of this embodiment, "partially resetting MAC" refers to partial MAC reset.

As one sub-embodiment of this embodiment, resetting the MAC comprises performing at least one operation, and partially resetting MAC comprises only part of the at least one operation.

As one sub-embodiment of this embodiment, partially resetting MAC comprises clearing the random access cache.

As one sub-embodiment of this embodiment, partially resetting MAC comprises clearing the HARQ cache.

As one sub-embodiment of this embodiment, partially resetting MAC comprises canceling beam failure recovery.

As one sub-embodiment of this embodiment, partially resetting MAC comprises canceling a pending scheduling request.

As one sub-embodiment of this embodiment, partially resetting MAC comprises stopping at least one timer of the MAC layer.

As one sub-embodiment of this embodiment, partially resetting MAC comprises stopping at least one counter of the MAC layer.

As one embodiment, the radio bearer comprises at least a signaling radio bearer and a data radio bearer.

As one embodiment, the radio bearer is a service or a service interface provided by the PDCP layer to a higher layer.

As one sub-embodiment of this embodiment, the higher layer comprises at least one of the RRC layer, the NAS, and the SDAP layer.

As one embodiment, the signaling radio bearer is a service or a service interface provided by the PDCP to a higher layer.

As one sub-embodiment of this embodiment, the higher layer comprises at least the former of the RRC layer and the NAS.

As one embodiment, the data radio bearer is a service or a service interface provided by the PDCP to a higher layer.

As one sub-embodiment of this embodiment, the higher layer comprises at least the former of the SDAP layer and the NAS.

As one embodiment, the expiration of the first timer triggers the determination and application of one RRC information block from the at least one RRC information block.

As one sub-embodiment of this embodiment, the second signaling indicates whether one RRC information block is determined and applied from the at least one RRC information block.

As one sub-embodiment of this embodiment, the second signaling indicates which RRC information block is determined and applied from the at least one RRC information block.

As one embodiment, the expiration of the first timer triggers the execution of cell selection.

As one sub-embodiment of this embodiment, the behavior of executing cell selection comprises selecting a first cell, and applying one RRC information block from the at least one RRC information block, wherein the PCell of the cell group configured by the one RRC information block is the first cell, or the PSCell of the cell group configured by the one RRC information block is the first cell.

As one embodiment, the benefits of the above method comprise: not triggering RRC reestablishment is conducive to reducing latency and shortening interruption time.

As one embodiment, the at least one RRC information block is used for indicating whether the expiration of the first timer triggers RRC reestablishment.

As one embodiment, the RRC message carrying the at least one RRC information block indicates whether the expiration of the first timer triggers RRC reestablishment.

As one embodiment, the first RRC information block indicates whether the expiration of the first timer triggers RRC reestablishment.

As one sub-embodiment of this embodiment, the AttemptLtm of the first RRC information block indicates whether the expiration of the first timer triggers RRC reestablishment.

As one sub-embodiment of this embodiment, the AttemptLtmConfig of the first RRC information block indicates whether the expiration of the first timer triggers RRC reestablishment.

As one embodiment, the second signaling indicates whether the expiration of the first timer triggers RRC reestablishment.

As one sub-embodiment of this embodiment, one bit of the second signaling indicates whether the expiration of the first timer triggers RRC reestablishment.

As one embodiment, each RRC information block in the at least one RRC information block has the same name.

As one embodiment, the second signaling does not comprise a PDU (Protocol Data Unit) of an RRC layer.

As one embodiment, the second signaling does not comprise a PDU (Protocol Data Unit) of an RLC layer.

As one embodiment, the second signaling comprises an index or a configuration index of one RRC information block amongst the at least one RRC information block.

As one embodiment, the second signaling comprises an index, a configuration index, or an identity of the cell group configured by one RRC information block amongst the at least one RRC information block.

As one embodiment, the second signaling comprises an index, a configuration index, or an identity of the cell comprised in the cell group configured by one RRC information block amongst the at least one RRC information block.

As one embodiment, a logical channel occupied by the at least one RRC information block comprises a DCCH (Dedicated Control Channel).

As one embodiment, the at least one RRC information block uses encryption.

As one embodiment, the at least one RRC information block uses integrity protection.

As one embodiment, the second signaling uses encryption.

As one embodiment, the second signaling uses integrity protection.

As one embodiment, the second signaling does not use encryption.

As one embodiment, the second signaling does not use integrity protection.

As one embodiment, the second signaling is for the first node.

As one embodiment, the second signaling is only for the first node.

As one embodiment, a physical channel occupied by the second signaling comprises a PDCCH (Physical Downlink Control Channel).

As one embodiment, the physical channel occupied by the second signaling comprises a PDSCH (Physical Downlink Shared Channel).

### Embodiment 2

Embodiment 2 illustrates a schematic diagram of one network architecture according to the present application, as shown in FIG. 2.

FIG. 2 illustrates a network architecture 200 of 5G NR, LTE (Long-Term Evolution) and LTE-A (Long-Term Evolution Advanced) systems. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, an NG-RAN (Next Generation Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with other access networks, but these entities/interfaces are not shown for simplicity. As shown in figures, the 5GS/EPS provides packet switching services, but those skilled in the art will readily appreciate that the various concepts presented throughout the present application may be extended to networks that provide circuit switching services or other cellular networks. The NG-RAN comprises an NR Node B (gNB) 203 and other gNBs 204. The gNB203 provides user and control plane protocol terminations toward the UE201. The gNB203 may be connected to other gNBs 204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similar functional apparatuses. A person skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 by an S1/NG interface. The 5GC/EPC210 comprises an MME (Mobility Management Entity)/AMF (Authentication Management Field)/SMF (Session Management Function) 211, other MMEs/AMFs/SMFs 214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, which is itself connected to the P-GW/UPF213. The P-GW provides UE IP address allocation and other functions. The P-GW/UPF213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, a first node in the present application is the UE201.

As one embodiment, a base station of a second node in the present application is the gNB203.

As one embodiment, a radio link from the UE201 to the NR Node B is an uplink.

As one embodiment, the radio link from the NR Node B to the UE201 is a downlink.

As one embodiment, the UE201 supports relay transmission.

As one embodiment, the UE201 comprises a mobile phone.

As one embodiment, the UE201 is a means of transportation comprising an automobile.

As one embodiment, the gNB203 is a MacroCellular base station.

As one embodiment, the gNB203 is a Micro Cell base station.

As one embodiment, the gNB203 is a Pico Cell base station.

As one embodiment, the gNB203 is one flying platform device.

As one embodiment, the gNB203 is a satellite device.

### Embodiment 3

Embodiment 3 shows a schematic diagram of an embodiment of one radio protocol architecture for a user plane and a control plane according to the present application, as shown in FIG. 3. FIG. 3 is a schematic diagram illustrating an embodiment of a radio protocol architecture for a user plane 350 and a control plane 300, and FIG. 3 shows a radio protocol architecture for the control plane 300 between a first node (UE, a gNB, or a satellite or aircraft in an NTN) and a second node (a gNB, UE, or a satellite or aircraft in an NTN), or between two pieces of UE using three layers: a Layer 1, a Layer 2, and a Layer 3. The Layer 1 (L1 layer) is the lowest layer and implements various PHY (Physical Layer) signal processing functions. The L1 layer will be referred to as a PHY301 herein. The Layer 2 (L2 layer) 305 is above the PHY301 and is responsible for links between the first node and the second node and between two pieces of UE through the PHY301. The L2 layer 305 comprises an MAC (Medium Access Control) sublayer 302, an RLC (Radio Link Control) sublayer 303, and a PDCP (Packet Data Convergence Protocol) sublayer 304, which terminate at the second node. The PDCP sublayer 304 provides multiplexing between different radio bearers and logical channels. The PDCP sublayer 304 also provides security by encrypting data packets, and provides inter-cell mobility support of the first node between second nodes. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between first nodes. The MAC sublayer 302 is also responsible for HARQ operations. An RRC (Radio Resource Control) sublayer 306 in the Layer 3 (L3 Layer) in the control plane 300 is responsible for obtaining radio resources (i.e., radio bearers) and configuring lower layers using an RRC signaling between the second node and the first node. A PC5-S (PC5 Signaling Protocol) sublayer 307 is responsible for processing signaling protocols of a PC5 interface. The radio protocol architecture for the user plane 350 comprises Layer 1 (Layer L1) and Layer 2 (Layer L2). The radio protocol architecture for a first node and a second node in the user plane 350 is substantially the same as the corresponding layers and sublayers in the control plane 300 as for a physical layer 351, a PDCP sublayer 354 in Layer L2 355, an RLC sublayer 353 in Layer L2 355, and an MAC sublayer 352 in Layer L2 355, but the PDCP sublayer 354 also provides header compression for upper layer data packets to reduce the radio transmission overhead. The L2 layer 355 in the user plane 350 also comprises an SDAP (Service Data Adaptation Protocol) sub-layer 356, and the SDAP sub-layer 356 is responsible for mapping between a QoS flow and a DRB (Data Radio Bearer) to support the diversity of services. An SRB may be regarded as a service or an interface provided by a PDCP layer to a higher layer, such as an RRC layer. In an NR system, SRBs comprise an SRB1, an SRB2, and an SRB3, and an SRB4 when it comes to secondary link communication, which are used for transmitting different types of control signalings. SRBs are bearers between UE and an access network, and are used for transmitting control signalings comprising RRC signalings between the UE and the access network. The SRB1 has special significance for UE. After each UE establishes an RRC connection, there will be the SRB1 for transmitting the RRC signaling. Most of the signalings are transmitted through the SRB1. If the SRB1 is interrupted or unavailable, UE must perform RRC reestablishment. The SRB2 is generally only used for transmitting NAS signalings or signalings related to security. UE may not be configured with the SRB3. Except for emergency services, UE must establish the RRC connection with a network for subsequent communication. Although not shown, the first node may have several upper layers above the Layer L2 355. In addition, it also comprises a network layer (e.g., IP layer) terminated at P-GW on the network side and an application layer terminated at the other terminal of the connection (e.g., remote UE, and servers). For UE related to relay services, its control plane may also comprise an adaptation sublayer SRAP (Sidelink Relay Adaptation Protocol) 308, and its user plane may also comprise an adaptation sublayer SRAP358. The introduction of an adaptation layer helps lower layers, such as an MAC layer, such as an RLC layer, to multiplex and/or distinguish data from a plurality of source UE. For nodes not related to relay communication, PC5-S307, SRAP308, and SRAP358 are not required in a communication process.

As one embodiment, the radio protocol architecture in FIG. 3 is applicable to the first node in the present application.

As one embodiment, the radio protocol architecture in FIG. 3 is applicable to the second node in the present application.

As one embodiment, the at least one RRC information block in the present application is generated in an RRC306.

As one embodiment, the second signaling in the present application is generated in an MAC302 or a PHY301.

As one embodiment, the third signaling in the present application is generated in an MAC302 or a PHY301.

As one embodiment, the first information in the present application is generated in an MAC302 or a PHY301.

As one embodiment, the first measurement result in the present application is generated in an MAC302 or a PHY301.

As one embodiment, the first acknowledgment information in the present application is generated in an MAC302 or a PHY301.

### Embodiment 4

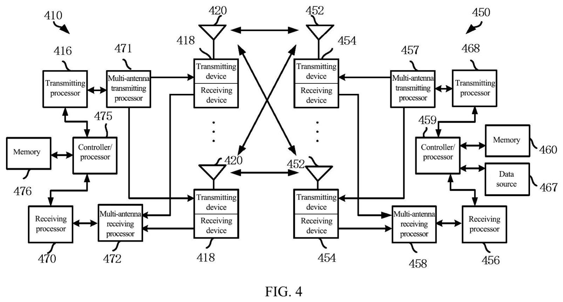

Embodiment 4 shows a schematic diagram of a first communication device and a second communication device according to one embodiment of the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, and optionally may also comprise a multi-antenna transmitting processor 457, a multi-antenna receiving processor 458, a transmitting device/receiving device 454 and an antenna 452.

The second communication device 410 comprises a controller/processor 475, a memory 476, a receiving processor 470, a transmitting processor 416, and optionally may also comprise a multi-antenna receiving processor 472, a multi-antenna transmitting processor 471, a transmitting device/receiving device 418 and an antenna 420.

In transmission from the second communication device 410 to the first communication device 450, at the second communication device 410, upper-layer data packets from a core network are provided to the controller/processor 475. The controller/processor 475 implements the functionality of an L2 layer (Layer-2). In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signalings to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more spatial streams. The transmitting processor 416 then maps each spatial stream to a subcarrier, multiplexes each spatial stream with a reference signal (e.g., pilot frequency) in a time domain and/or frequency domain, and then uses an inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses the fast Fourier transform (FFT) to convert the baseband multi-carrier symbol stream from the time domain to the frequency domain after the receiving analog precoding/beamforming operation. In the frequency domain, a physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the first communication device 450. The symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements L2 layer functions for the user plane and the control plane. The controller/processor 459 is also responsible for retransmission of lost packets and signalings to the second communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced spatial stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the first communication device 450 to the second communication device 410, the functions at the second communication device 410 are similar to the receiving functions at the first communication device 450 described in the transmission from the second communication device 410 to the first communication device 450. Each receiving device 418 receives a radio-frequency signal through a corresponding antenna 420 thereof, converts the received radio-frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover the upper-layer data packets from the UE450. The upper-layer data packets from the controller/processor 475 may be provided to the core network.

As one embodiment, the first communication device 450 apparatus comprises: at least one processor and at least one memory, wherein the at least one memory comprises a computer program code; the at least one memory and the computer program code are configured to be used together with the at least one processor, and the first communication device 450 apparatus at least: receives at least one RRC information block, each RRC information block amongst the at least one RRC information block being used for configuring one cell group, and the application of any RRC information block amongst the at least one RRC information block depending on receiving a signaling other than the at least one RRC information block; receiving a second signaling, the second signaling being a signaling of a protocol layer below the RRC layer, and, in response to receiving the second signaling, applying a first RRC information block, the second signaling indicating the first RRC information block amongst the at least one RRC information block, and the application of the first RRC information block not comprising random access; and accompanied by the reception of the second signaling, starting a first timer, a stopping of the first timer depending on receiving first information, the first information being generated by the protocol layer below the RRC layer, and the reception of the first information being used for determining that the first RRC information block is successfully applied, wherein the expiration of the first timer is used for determining that the first RRC information block fails to be applied successfully.

As one embodiment, the first communication device 450 comprises: a memory storing a computer-readable instruction program, the computer-readable instruction program generates actions when executed by at least one processor, the action comprising: receiving at least one RRC information block, each RRC information block amongst the at least one RRC information block being used for configuring one cell group, and the application of any RRC information block amongst the at least one RRC information block depending on receiving a signaling other than the at least one RRC information block; receiving a second signaling, the second signaling being a signaling of a protocol layer below the RRC layer, and, in response to receiving the second signaling, applying a first RRC information block, the second signaling indicating the first RRC information block amongst the at least one RRC information block, and the application of the first RRC information block not comprising random access; and accompanied by the reception of the second signaling, starting a first timer, a stopping of the first timer depending on receiving first information, the first information being generated by the protocol layer below the RRC layer, and the reception of the first information being used for determining that the first RRC information block is successfully applied, wherein the expiration of the first timer is used for determining that the first RRC information block fails to be applied successfully.

As one embodiment, the first communication device 450 corresponds to a first node in the present application.

As one embodiment, the second communication device 410 corresponds to a second node in the present application.

As one embodiment, the first communication device 450 is a piece of UE.

As one embodiment, the first communication device 450 is one vehicle-mounted terminal.

As one embodiment, the first communication device 450 is one mobile phone.

As one embodiment, the second communication device 450 is one relay.

As one embodiment, the second communication device 410 is one satellite.

As one embodiment, the second communication device 410 is one aircraft.

As one embodiment, the second communication device 410 is one base station.

As one embodiment, the receiving device 454 (comprising the antenna 452), the receiving processor 456 and the controller/processor 459 are used for receiving the at least one RRC information block in the present application.

As one embodiment, the receiving device 454 (comprising the antenna 452), the receiving processor 456 and the controller/processor 459 are used for receiving the second signaling in the present application.

As one embodiment, the receiving device 454 (comprising the antenna 452), the receiving processor 456 and the controller/processor 459 are used for receiving the third signaling in the present application.

As one embodiment, the receiving device 454 (comprising the antenna 452), the receiving processor 456 and the controller/processor 459 are used for receiving the first information in the present application.

As one embodiment, the transmitting device 454 (comprising the antenna 452), the transmitting processor 468 and the controller/processor 459 are used for sending the first measurement result in the present application.

As one embodiment, the transmitting device 454 (comprising the antenna 452), the transmitting processor 468 and the controller/processor 459 are used for sending the first acknowledgment information in the present application.

### Embodiment 5

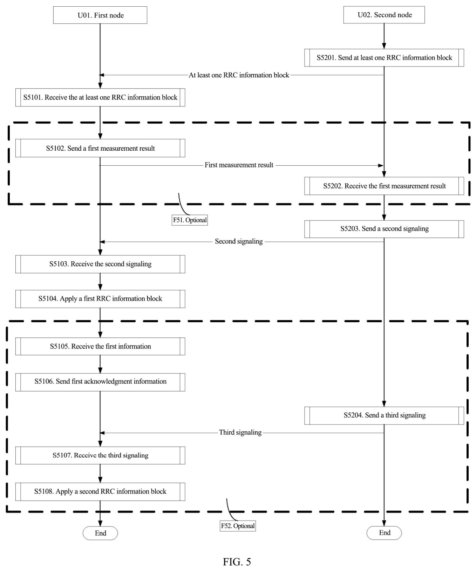

Embodiment 5 illustrates a flowchart of radio signal transmission according to one embodiment of the present application, as shown in FIG. 5. In FIG. 5, U01 corresponds to a first node of the present application. It is particularly noted that the order in this example does not limit the signal transmission order and implementation order in the present application, and steps in F51 and F52 are optional.

For **a first node U01**, at least one RRC information block is received in step S5101; a first measurement result is sent in step S5102; a second signaling is received in step S5103; applies one of the first RRC information blocks in step S5104; first information is received in step S5105; first acknowledgment information is sent in step S5106; a third signaling is received in step S5107; and a second RRC information block is applied in step S5108.

For **a second node U02**, at least one RRC information block is sent in step S5201; a first measurement result is received in step S5202; a second signaling is sent in step S5203; and a third signaling is sent in step S5204.

In Embodiment 5, each RRC information block amongst the at least one RRC information block is used for configuring one cell group; the application of any RRC information block amongst the at least one RRC information block depends on receiving a signaling other than the at least one RRC information block; the second signaling is a signaling of a protocol layer below an RRC layer; in response to receiving the second signaling, applying a first RRC information block, the second signaling indicating the first RRC information block amongst the at least one RRC information block, and the application of the first RRC information block not comprising random access; and accompanied by the reception of the second signaling, starting a first timer, a stopping of the first timer depending on receiving first information, the first information being generated by the protocol layer below the RRC layer, and the reception of the first information being used for determining that the first RRC information block is successfully applied, wherein the expiration of the first timer is used for determining that the first RRC information block fails to be applied successfully.

As one embodiment, the second node U02 is one base station.

As one embodiment, the second node U02 is one network device.

As one embodiment, the second node U02 is a source cell of the first node U01.

As one embodiment, the second node U02 is a source SpCell of the first node U01.

As one embodiment, the second node U02 is a primary cell group of the first node U01.

As one embodiment, the second node U02 is a PCell of the first node U01 when receiving the at least one RRC information block.

As one embodiment, the first node U01 is switched from the second node U02 to the target SpCell.

As one sub-embodiment of this embodiment, the first node U01 is switched to the target SpCell by LTM.

As one embodiment, each RRC information block amongst the at least one RRC information block comprises pre-configured parameters for handover.

As one embodiment, the handover comprises LTM.

As one embodiment, an SpCell of the first node U01 after the successful execution of step S5104 is a cell configured by the first RRC information block.

As one embodiment, an air interface between the first node U01 and the second node U02 is a Uu interface.

As one embodiment, the first node U01 is in an RRC connected state.

As one embodiment, cells comprised in the cell group configured by the at least one RRC information block are nodes other than the second node U02.

As one embodiment, after the second node U02 receives the first acknowledgment information, cell switch is determined.

As one embodiment, the cell switch is or comprises LTM.

As one embodiment, the second node U02 determines cell switch based on the first measurement result, and the first measurement result comprises a measurement result of an L1 or a target cell recommended based on the measurement result of the L1.

As one sub-embodiment of this embodiment, the target cell comprises the cells comprised in the cell group configured by the first RRC information block.

As one sub-embodiment of this embodiment, the target cell comprises the SpCells comprised in the cell group configured by the first RRC information block.

As one embodiment, a meaning of an L3 (Layer 3)-based measurement comprises: using an L3 filter to process measurement data.

As one embodiment, a meaning of an L1 (Layer 1)-based measurement comprises: using an L1 filter to process measurement data.

As one embodiment, a measurement result of the L3 is smoother than a measurement result of the L1, but it takes longer time to obtain.

As one embodiment, the measurement result of the L1 can be obtained more quickly, but it is easy to cause ping-pong handover; and although a result of the L2 is more stable, the acquisition time is relatively long, which is easy to cause disconnection before handover. The method proposed in the present application may quickly conduct handover between a plurality of candidate cells, thereby avoiding disconnection and also avoiding the problem of data interruption caused by traditional ping-pong handover.

As one embodiment, the first node U01 does not need to use random access for the SpCells comprised in the at least one cell group configured by the at least one RRC information block.

As one embodiment, the at least one RRC information block is used for configuring the first measurement result.

As one embodiment, step S5101 is before step S5102.

As one embodiment, step S5101 is before step S5103.

As one embodiment, step S5104 is after step S5103.

As one embodiment, step S5103 is after step S5102.

As one embodiment, step S5201 is before step S5202.

As one embodiment, step S5203 is after step S5202.

As one embodiment, step S5105 is before step S5106.

As one embodiment, step S5107 is before step S5108.

As one embodiment, when the first RRC information block fails to be applied, a sender of the third signaling is the second node U02.

As one embodiment, when the first RRC information block is successfully applied, a sender of the third signaling is an SpCell of the cell group configured by the first RRC information block.

As one embodiment, when the first RRC information block is successfully applied, a sender of the third signaling is the PCell of the cell group configured by the first RRC information block; and the first RRC information block is used for configuring a primary cell group.

As one embodiment, the first measurement result is used for triggering the second signaling.

As one embodiment, the first measurement result is used for indicating whether a condition for triggering the application associated with the at least one RRC information block is met.

As one embodiment, the at least one RRC information block is used for configuring measurement on which the first measurement result is based.

As one embodiment, the RRCReconfiguration message to which the at least one RRC information block belongs is used for configuring the measurement on which the first measurement result is based.

As one embodiment, the execution of each RRC information block in the at least one RRC information block depends on the second signaling.

As one embodiment, the execution of each RRC information block amongst the at least one RRC information block depends on the second signaling, comprising: the at least one RRC information block are not immediately executed or automatically executed after being received, but waits for the second signaling, and one of the at least one RRC information block is executed only when it is triggered by the second signaling.

As one embodiment, the second signaling is DCI.

As one embodiment, the first node U01 monitors a PDCCH to receive the second signaling.

As one embodiment, the second signaling is unicast.

As one embodiment, the second signaling indicates reference signal resources of the target SpCell.

As one embodiment, the second signaling indicates beam information of the target SpCell.

As one embodiment, the first measurement result indicates the reference signal resources of the recommended target SpCell.

As one embodiment, the first measurement result indicates the beam information of the recommended target SpCell.

As one embodiment, in step S5104, applying one of the at least one RRC information blocks comprises applying a TCI (Transmission Configuration Indication) state.

As one embodiment, in step S5104, applying the first RRC information block comprises applying a TCI (Transmission Configuration Indication) state for an SpCell of the cell group configured by the first RRC information block.

As one embodiment, in step S5104, applying the first RRC information block comprises applying a TCI (Transmission Configuration Indication) state associated with the SpCell of the cell group configured by the first RRC information block.

As one embodiment, in step S5104, applying a unified TCI state is comprised.

As one embodiment, after receiving the at least one RRC information block, the first node U01 performs feedback confirmation.

As one embodiment, the at least one RRC information block are comprised in at least one RRCReconfiguration message.

As one embodiment, the application of the one of the at least one RRC information block is not accompanied by a random access process for a cell configured by the at least one RRC information block.

As one embodiment, the first measurement result is used for reporting a measurement result or reporting a recommended target cell or reporting a recommended reference signal resource.

As one embodiment, the at least one RRC information block comprises a second threshold, and the second threshold is used for controlling the sending of the first measurement result.

As one sub-embodiment of this embodiment, only when a quality of a current cell does not meet the second threshold, the first measurement result is sent.

As one sub-embodiment of this embodiment, only when the measurement result meets the second threshold, the first measurement result is sent.

As one embodiment, the at least one RRC information block indicates random access resources for a cell configured by the at least one RRC information block.

As one embodiment, the first measurement result is used for triggering the second signal.

As one embodiment, each RRC information block amongst the at least one RRC information block is used for configuring one target cell group.

As one embodiment, each RRC information block amongst the at least one RRC information block is used for configuring one candidate target cell group.

As one embodiment, a sender of the first information is a cell other than the second node U02.

As one sub-embodiment of this embodiment, the first RRC information block is used for configuring a primary cell group.

As one embodiment, the sender of the first information is an SpCell of the cell group configured by the first RRC information block.

As one embodiment, the first information does not belong to a random access process.

As one embodiment, the first information is not used for determining the completion of one random access process.

As one embodiment, the first information is one physical layer signal.

As one embodiment, the first information is a signal on the reference signal resource.

As one embodiment, the first information is a measurement result on the reference signal resource.

As one embodiment, there is a fixed time interval between the reception of the first information and the application of the first RRC information block.

As one embodiment, the sending of the first acknowledgment information depends on the reception of the first information.

As one embodiment, the first acknowledgment information is sent only when the first information is received.

As one embodiment, a recipient of the first acknowledgment information is the same as the sender of the first information.

As one embodiment, the first acknowledgment information is or comprises a physical layer signal.

As one embodiment, the first acknowledgment information is or comprises UCI (Uplink Control Information).

As one embodiment, the first acknowledgment information is or comprises an MAC CE.

As one embodiment, the first acknowledgment information is or comprises an SR (Scheduling Request).

As one embodiment, the first acknowledgment information is generated by one sequence or one pseudo-random sequence.

As one embodiment, the third signaling is a signaling of a protocol layer below an RRC layer.

As one embodiment, the third signaling is or comprises an MAC CE.

As one embodiment, the third signaling comprises DCI.

As one embodiment, the third signaling has the same name as the second signaling.

As one embodiment, the third signaling and the second signaling are generated by the same protocol layer.

As one embodiment, the first node U01 applies the second RRC information block in response to receiving the third signaling.

As one sub-embodiment of this embodiment, the second RRC information block is not the first RRC information block.

As one sub-embodiment of this embodiment, the second RRC information block is the first RRC information block.

As one sub-embodiment of this embodiment, applying the second RRC information block comprises applying each configuration parameter in the second RRC information block.

As one sub-embodiment of this embodiment, applying the second RRC information block comprises stopping at least one timer other than the first timer.

As one sub-embodiment of this embodiment, applying the second RRC information block comprises configuring a physical resource.

As one sub-embodiment of this embodiment, applying the second RRC information block comprises configuring a reference signal resource.

As one sub-embodiment of this embodiment, the second RRC information block is used for configuring an MCG, and applying the second RRC information block comprises releasing the current MCG.

As one sub-embodiment of this embodiment, the second RRC information block is used for configuring an MCG, and applying the second RRC information block comprises releasing the SCell of the current MCG.

As one embodiment, the third signaling indicates the second RRC information block amongst the at least one RRC information block.

As one sub-embodiment of this embodiment, the third signaling indicates an identity of the second RRC information block.

As one sub-embodiment of this embodiment, the third signaling indicates an index of the second RRC information block amongst the at least one RRC information block.

As one sub-embodiment of this embodiment, the third signaling indicates a configuration identity or a configuration index of the second RRC information block.

As one sub-embodiment of this embodiment, the second RRC information block comprises a configuration identity and a configuration index.

As one embodiment, the application of the second RRC information block comprises triggering random access.

As one sub-embodiment of this embodiment, the random access is for an SpCell of the cell group configured by the second RRC information block.

As one embodiment, the successful application of the second RRC information block depends on the successful completion of random access.

As one sub-embodiment of this embodiment, the random access is for an SpCell of the cell group configured by the second RRC information block.

As one embodiment, the application of the second RRC information block comprises random access.

As one sub-embodiment of this embodiment, the random access is for an SpCell of the cell group configured by the second RRC information block.

As one embodiment, the application of the second RRC information block involves random access.

As one sub-embodiment of this embodiment, the random access is for an SpCell of the cell group configured by the second RRC information block.

As one embodiment, the successful application of the second RRC information block requires random access.

As one sub-embodiment of this embodiment, the random access is for an SpCell of the cell group configured by the second RRC information block.

As one embodiment, the application of the second RRC information block is accompanied by random access.

As one sub-embodiment of this embodiment, the random access is for an SpCell of the cell group configured by the second RRC information block.

As one embodiment, the first node U01 starts the first timer accompanied by the reception of the third signaling.

As one embodiment, the meaning of the sentence "accompanied by the reception of the third signaling, the first timer is started" is or comprises: the reception of the third signaling triggers the starting of the first timer.

As one embodiment, the meaning of the sentence "accompanied by the reception of the third signaling, the first timer is started" is or comprises: the reception of the third signaling triggers the application of the second RRC information block, and the application of the second RRC information block comprises starting the first timer.

As one embodiment, the meaning of the sentence "accompanied by the reception of the third signaling, the first timer is started" is or comprises: the reception of the third signaling triggers the application of the second RRC information block, and the application of the second RRC information block triggers or is accompanied by the starting of the first timer.

As one embodiment, starting a timer in the present application comprises starting and restarting.

As one embodiment, the first node U01 stops the first timer in response to successful completion of random access to a cell in the cell group configured by the second RRC information block.

As one embodiment, the first node U01 initiates a random access process accompanied by the application of the second RRC information block, and stops the first timer in response to the successful completion of the random access process.

As one sub-embodiment of this embodiment, the random access process is for a cell in the cell group configured by the second RRC information block.

As one sub-embodiment of this embodiment, the random access process is for an SpCell of the cell group configured by the second RRC information block.

As one embodiment, the first node U01 uses, comprises, or triggers the random access process in the application of the second RRC information block, and stops the first timer in response to the successful completion of the random access process.

As one sub-embodiment of this embodiment, the random access process is for a cell in the cell group configured by the second RRC information block.

As one sub-embodiment of this embodiment, the random access process is for an SpCell of the cell group configured by the second RRC information block.

As one embodiment, the second RRC information block is one RRC information block other than the first RRC information block amongst the at least one RRC information block.

As one embodiment, the third signaling indicates whether random access is required for applying the second RRC information block.

As one embodiment, the second RRC information block is used for indicating whether random access is required for applying the second RRC information block.

As one embodiment, after the first RRC information block is successfully applied, the at least one RRC information block will not be automatically released.

As one embodiment, after the first RRC information block is successfully applied, under the condition that it is not indicated by the network, the at least one RRC information block will not be released.

As one embodiment, after the first RRC information block is successfully applied, an RRC information block other than the first RRC information block amongst the at least one RRC information block will not be automatically released.

As one embodiment, after the first RRC information block is successfully applied, under the condition that it is not indicated by the network, an RRC information block other than the first RRC information block amongst the at least one RRC information block will not be released.

As one embodiment, the benefits of the above method comprise: it is beneficial to reducing signaling overhead, and is particularly useful in scenarios such as intra-CU and/or intra-DU.

As one embodiment, the third signaling is sent when the first RRC information block is not successfully applied.

As one embodiment, the third signaling does not depend on whether the first RRC information block is successfully applied.

As one embodiment, the step S5107 occurs simultaneously with step S5108.

### Embodiment 6

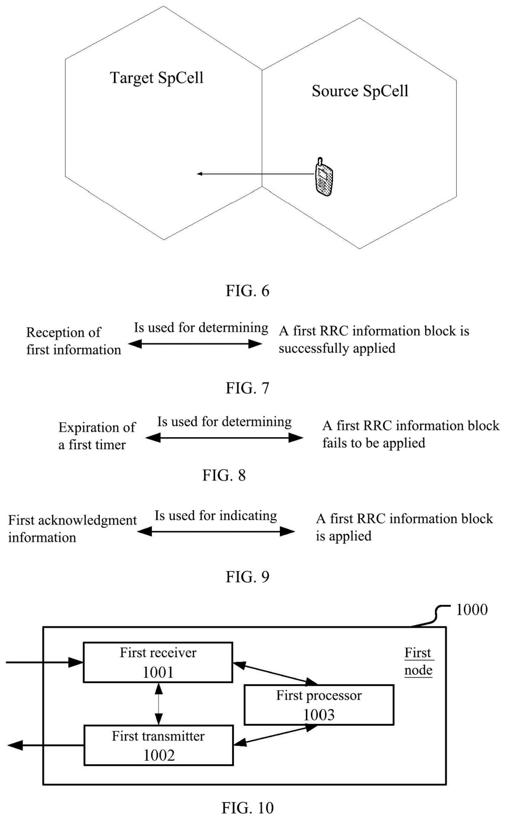

Example 6 illustrates a schematic diagram of LTM according to one embodiment of the present application, as shown in FIG. 6. The mobile phone in FIG. 6 corresponds to the first node of the present application, and the straight line with an arrow indicates that the first node moves from a source SpCell to a target SpCell.

As one embodiment, LTM is mobility triggered by Layer 1 and/or Layer 2.

As one sub-embodiment of this embodiment, the Layer 1 refers to a signaling of Layer 1.

As one sub-embodiment of this embodiment, the Layer 1 refers to DCI.

As one sub-embodiment of this embodiment, the Layer 1 refers to a signaling of Layer 2.

As one sub-embodiment of this embodiment, the Layer 1 refers to an MAC CE.

As one embodiment, LTM comprises switching from the source SpCell to the target SpCell.

As one sub-embodiment of this embodiment, the meaning of phrase "switching from the source SpCell to the target SpCell" is switching from a source PCell to a target PCell.

As one sub-embodiment of this embodiment, the meaning of phrase "switching from the source SpCell to the target SpCell" is switching from a source PSCell to a target PSCell.

As one embodiment, the source SpCell is the PCell of an MCG when the first node receives the second signaling.

As one sub-embodiment of this embodiment, the first RRC information block is used for configuring the MCG.

As one embodiment, the source SpCell is the PSCell of an SCG when the first node receives the second signaling.

As one sub-embodiment of this embodiment, the first RRC information block is used for configuring the SCG.

As one embodiment, the SpCell of the cell group configured by the first RRC information block is the target SpCell.

As one embodiment, after the LTM is successfully executed, the target SpCell becomes the SpCell of the first node, and the source SpCell is no longer the SpCell of the first node.

As one sub-embodiment of this embodiment, the source SpCell in FIG. 6 is a cell that sends the at least one RRC information block.

As one embodiment, the first node receives the at least one RRC information block from the source SpCell, sends a first signal near the boundary between the source SpCell and the target SpCell, and then receives a second signaling from the source SpCell, wherein the second signaling indicates to execute the first RRC information block, and after the execution of the first RRC information block is completed, the first node switches to the target SpCell.

As one embodiment, when the first node fails to execute the first RRC information block, the first node does not initiate RRC connection reestablishment.

As one sub-embodiment of this embodiment, the first node selects a cell from the SpCell of the cell group configured by the at least one RRC information block and applies the RRC information block of the cell group that is configured for the SpCell amongst the at least one RRC information block.

As one sub-embodiment of this embodiment, the reception of the second signaling triggers the starting of a second timer.

As one sub-embodiment of this embodiment, before the second timer expires, when the first node fails to apply an RRC information block amongst the at least one RRC information block, one RRC information block amongst the at least one RRC information block can be selected and applied.

As one sub-embodiment of this embodiment, the expiration of the second timer triggers RRC connection reestablishment.

As one embodiment, in a traditional cell handover, the source SpCell configures measurements and reports. When the first node is at an edge of the cell, a report is sent when a condition of the report is met, and the content of the report generally comprises a measurement result of the target SpCells. The source SpCell sends a signaling for switching to the target SpCell according to the measurement report. After receiving the handover signaling, the first node initiates a random access process to the target SpCell, and then switches to the target SpCells. The entire process is based on RRC signaling, the measurements and reports are based on L3, and random access is required, resulting in relatively high latency for the entire process.

As one embodiment, identities of the cell groups to which the source SpCell and the target SpCell respectively belong are different.

As one embodiment, identities of the cell groups to which the source SpCell and the target SpCell respectively belong are the same.

As one embodiment, in a process of switching from the source SpCell to the target SpCell, the first node does not need to initiate random access for the target SpCell.

As one embodiment, in a process of switching from the source SpCell to the target SpCell, the first node determines whether the handover is successfully performed based on whether the first timer expires.

As one embodiment, the phrase "handover" in the present application is or comprises LTM.

As one embodiment, the phrase "handover" in the present application is or comprises cell switch.

As one embodiment, the benefit of the above method is that the handover latency can be shortened without random access.

### Embodiment 7

Embodiment 7 illustrates a schematic diagram of reception of first information being used for determining that a first RRC information block is successfully applied according to one embodiment of the present application, as shown in FIG. 7.

As one embodiment, after receiving the first information, it can be determined that the first RRC information block is successfully applied.

As one embodiment, the meaning of the first RRC information block being successfully applied is or comprises: successfully establishing a connection with an SpCell of a cell group configured by the first RRC information block.

As one embodiment, the meaning of the first RRC information block being successfully applied is or comprises: successfully switching to the SpCell of the cell group configured by the first RRC information block.

As one embodiment, the meaning of the first RRC information block being successfully applied is or comprises: successfully switching to the cell group configured by the first RRC information block.

As one embodiment, the meaning of the first RRC information block being successfully applied is or comprises: successfully executing the second signaling.

As one embodiment, after receiving the first information, it can be determined that the second signaling is successfully executed, and the second signaling is successfully executed, that is, the first RRC information block is successfully applied.

As one embodiment, the first information occupies a resource of the cell group configured by the first RRC information block.

As one embodiment, the first information is signal on a PDCCH.

As one embodiment, the first information is a reference signal.

As one embodiment, the first information is one or a first downlink SDU or PDU.

As one embodiment, the first information is one or a first dedicated downlink signal.

As one embodiment, the first information is a first received downlink reference signal.

As one sub-embodiment of this embodiment, the downlink reference signal occupies a resource of the target SpCell.

As one sub-embodiment of this embodiment, the downlink reference signal occupies a resource indicated by the first RRC information block.

As one embodiment, the first information explicitly indicates that LTM is successful.

As one sub-embodiment of this embodiment, the success of LTM determines that the first RRC information block is successfully applied.

As one embodiment, the first information explicitly indicates that the second signaling is successfully executed.

As one sub-embodiment of this embodiment, the successful execution of the second signaling determines that the first RRC information block is successfully applied.

As one embodiment, the first information explicitly indicates that the first RRC information block is successfully applied.

As one embodiment, the first information is used for confirming first indication information.

As one embodiment, the first node sends the first indication information.

As one embodiment, the application of the first RRC information block comprises sending the first indication information.

As one embodiment, the application of the first RRC information block is accompanied by sending the first indication information.

As one embodiment, the application of the first RRC information block triggers the sending of the first indication information.

As one embodiment, the first indication information is configured by the first RRC information block.

As one embodiment, the first indication information occupies the resource of the cell group configured by the first RRC information block.

As one embodiment, the first indication information occupies the resource of the SpCell of the cell group configured by the first RRC information block.

As one embodiment, the first indication information is or comprises a physical layer signal.

As one embodiment, the first indication information is or comprises an SR.

As one embodiment, the first indication information is or comprises an UCI.

As one embodiment, the first indication information comprises an uplink reference signal.

As one sub-embodiment of this embodiment, the first indication information occupies a PUCCH (Physical Uplink Control Channel).

As one embodiment, the first indication information is used for indicating that an SpCell is entered.

As one sub-embodiment of this embodiment, the one SpCell is an SpCell of the cell group configured by the first RRC information block.

As one embodiment, the first indication information is used for indicating that a connection with an SpCell is established.

As one sub-embodiment of this embodiment, the one SpCell is an SpCell of the cell group configured by the first RRC information block.

As one embodiment, the first indication information is used for indicating that LTM is executed.

As one embodiment, the first indication information is used for indicating that an RRC information block amongst the at least one RRC information block is applied.

As one embodiment, the first indication information explicitly indicates that the first RRC information block is successfully applied.

As one embodiment, the first indication information indirectly indicates that the first RRC information block is successfully applied.

### Embodiment 8

Embodiment 8 illustrates a schematic diagram of expiration of a first timer being used for determining that a first RRC information block fails to be applied according to one embodiment of the present application, as shown in FIG. 8.

As one embodiment, the meaning of the phrase "failing to successfully apply the one RRC information block amongst the at least one RRC information block" is: failing to successfully apply at least one field in the one RRC information block amongst the at least one RRC information block.

As one embodiment, the meaning of the phrase "failing to successfully apply the one RRC information block amongst the at least one RRC information block" is: failing to successfully apply ReconfigurationWithSync in the one RRC information block amongst the at least one RRC information block.

As one embodiment, the meaning of the phrase "failing to successfully apply the one RRC information block amongst the at least one RRC information block" is: failing to apply ReconfigurationWithSync in the one RRC information block amongst the at least one RRC information block.

As one embodiment, the first timer is associated with the application of the first RRC information block.

As one embodiment, the starting of the first timer is triggered by the application of the first RRC information block, and the expiration of the first timer means that the first RRC information block is not successfully applied.

As one embodiment, if the expiration of the first timer is caused by the application of the first RRC information block, the expiration of the first timer determines that the first RRC information block fails to be applied.

As one embodiment, if the starting of the first timer is caused by the application of the first RRC information block, the expiration of the first timer determines that the first RRC information block fails to be applied.

As one embodiment, if the starting of the first timer is caused by LTM, the expiration of the first timer determines that an RRC information block amongst the at least one RRC information block fails to be applied; and the first RRC information block is the RRC information that is attempted to be applied amongst the at least one RRC information block.

As one embodiment, if the reconfigurationWithSync that triggers the starting of the first timer is comprised by the at least one RRC information block, the expiration of the first timer determines that an RRC information block amongst the at least one RRC information block fails to be successfully applied; and the first RRC information block is the RRC information that is attempted to be applied amongst the at least one RRC information block.

As one embodiment, the first node considers the application of the first RRC information block has failed when the first timer expires.

As one embodiment, the first node considers that the LTM or an LTM instance has failed when the first timer expires.

As one embodiment, the meaning of failing to successfully apply the first RRC information block comprises failing to successfully execute the second signaling.

As one embodiment, the first timer is a timer at an MAC layer, and the expiration of the first timer triggers the MAC layer to send an indication to a higher layer.

As one sub-embodiment of this embodiment, the higher layer comprises the RRC layer.

As one sub-embodiment of this embodiment, the higher layer comprises the RLC layer.

As one sub-embodiment of this embodiment, the higher layer comprises the NAS layer.

As one sub-embodiment of this embodiment, the indication comprises LTM failure.

As one sub-embodiment of this embodiment, the indication comprises a failure to successfully switch to the target cell.

As one sub-embodiment of this embodiment, the indication comprises expiration of the first timer.

As one sub-embodiment of this embodiment, when the higher layer receives the indication, the higher layer determines that application of the first RRC information block has failed.

### Embodiment 9

Embodiment 9 illustrates a schematic diagram of first acknowledgment information being used for indicating that a first RRC information block is applied according to one embodiment of the present application, as shown in FIG. 9.

As one embodiment, the first acknowledgment information indicates that the first RRC information block is successfully applied.

As one sub-embodiment of this embodiment, a recipient of the first acknowledgment information is a target cell.

As one sub-embodiment of this embodiment, a recipient of the first acknowledgment information is a cell group configured by the first RRC information block.

As one sub-embodiment of this embodiment, a recipient of the first acknowledgment information is an SpCell of the cell group configured by the first RRC information block.

As one embodiment, the first acknowledgment information indicates that the first RRC information block is not successfully applied.

As one sub-embodiment of this embodiment, a recipient of the first acknowledgment information is a source cell.

As one sub-embodiment of this embodiment, a recipient of the first acknowledgment information is a sender of the first RRC information block.

As one sub-embodiment of this embodiment, a recipient of the first acknowledgment information is a sender of the second signaling.

As one embodiment, the first acknowledgment information is or comprises an L1 measurement result.

As one sub-embodiment of this embodiment, the first node sends the first acknowledgment information only when the first RRC information block is not successfully applied.

As one sub-embodiment of this embodiment, the signaling or message name of the L1 measurement result is the same as that of the first measurement result.

As a sub-embodiment of this embodiment, when the first acknowledgment information is received, the recipient of the first acknowledgment information considers or may consider or assumes that the first RRC information block is not successfully applied.

As one embodiment, the first acknowledgment information is or comprises a signal in a random access process.

As one sub-embodiment of this embodiment, only if one RRC information block comprising a random access process is applied.

As one embodiment, the first acknowledgment information is or comprises an uplink signal.

As one sub-embodiment of this embodiment, any uplink signal occupies a resource of the target cell.

As one sub-embodiment of this embodiment, any uplink signal occupies a resource of the cell group configured by the first RRC information block.

As one sub-embodiment of this embodiment, any uplink signal occupies a resource of the an SpCell of the cell group configured by the first RRC information block.

As one sub-embodiment of this embodiment, the first acknowledgment information is used for determining that the first RRC information block is successfully applied.

As one sub-embodiment of this embodiment, the first acknowledgment information is sent on a PUCCH.

As one sub-embodiment of this embodiment, the first acknowledgment information comprises UCI.

As one sub-embodiment of this embodiment, the first acknowledgment information comprises an MAC CE.

As one embodiment, the first acknowledgment information is or comprises any uplink signal.

As one sub-embodiment of this embodiment, any uplink signal occupies a resource of the target cell.

As one sub-embodiment of this embodiment, any uplink signal occupies a resource of the cell group configured by the first RRC information block.

As one sub-embodiment of this embodiment, any uplink signal occupies a resource of the an SpCell of the cell group configured by the first RRC information block.

As one sub-embodiment of this embodiment, the first acknowledgment information is used for determining that the first RRC information block is successfully applied.

As one embodiment, the first acknowledgment information is used for indicating that the target cell is reached or the SpCell of the cell group configured by the first RRC information block is reached.

As one sub-embodiment of this embodiment, the first acknowledgment information is sent only after the first RRC information block is successfully applied.

As a sub-embodiment of this embodiment, after receiving the first acknowledgment information, the first acknowledgment information may consider that the first RRC information block is successfully applied.

As one embodiment, the first acknowledgment information is used for triggering the first information, and the reception of the first information can determine that the first RRC information block is successfully applied.

### Embodiment 10

Embodiment 10 illustrates a structural block diagram of a processing apparatus used in a first node according to one embodiment of the present application, as shown in FIG. 10. In FIG. 10, the processing apparatus 1000 in the first node comprises a first receiver 1001, a first transmitter 1002, and a first processor 1003. In Embodiment 10,
a first receiver 1001 receives at least one RRC information block, each RRC information block amongst the at least one RRC information block being used for configuring one cell group, and the application of any RRC information block amongst the at least one RRC information block depending on receiving a signaling other than the at least one RRC information block;
the first receiver 1001 receives a second signaling, the second signaling being a signaling of a protocol layer below an RRC layer; in response to receiving the second signaling, applying a first RRC information block, the second signaling indicating the first RRC information block amongst the at least one RRC information block, and the application of the first RRC information block does not comprise random access; and accompanied by the reception of the second signaling, starting a first timer, a stopping of the first timer depending on receiving first information, the first information being generated by the protocol layer below the RRC layer, and the reception of the first information being used for determining that the first RRC information block is successfully applied,
wherein the expiration of the first timer is used for determining that the first RRC information block fails to be applied.

As one embodiment, a first transmitter 1002 sends a first measurement result, the first measurement result being an L1 measurement result; and
the first transmitter sends first acknowledgment information, the first acknowledgment information being used for indicating that the first RRC information block is applied,
wherein the behavior of sending the first measurement result is performed before receiving the second signaling, and the behavior of sending the first acknowledgment information is performed after receiving the second signaling.

As one embodiment, the first receiver 1001 receives a third signaling, the third signaling being a signaling of the protocol layer below the RRC layer; in response to receiving the third signaling, applies a second RRC information block, the third signaling indicating the second RRC information block amongst the at least one RRC information block, and the application of the second RRC information block comprising triggering random access; and accompanied by the reception of the third signaling, starting the first timer; and in response to successful completion of random access to a cell in the cell group configured by the second RRC information block, stops the first timer.

As one embodiment, the expiration of the first timer does not trigger RRC reestablishment.

As one embodiment, the at least one RRC information block is used for indicating whether the expiration of the first timer triggers RRC reestablishment.

As one embodiment, in response to the expiration of the first timer, a first processor 1003 applies one RRC information block of the at least one RRC information block to start the first timer.

As one embodiment, in response to the expiration of the first timer, the first processor 1003 falls back to a configuration before applying the first RRC information block.

As one embodiment, the phrase "falling back to a configuration before applying the first RRC information block" does not comprise releasing a signaling radio bearer, discarding keys, or falling back to a previous PDCP state variable for a DRB, and the phrase "falling back to a configuration before applying the first RRC information block" comprises at least partially resetting MAC.

As one embodiment, the phrase "falling back to a configuration before applying the first RRC information block" does not comprise releasing or reestablishing an RLC entity.

As one embodiment, the first node is a piece of user equipment (UE).

As one embodiment, the first node is one terminal supporting a large latency difference.

As one embodiment, the first node is one terminal supporting an NTN.

As one embodiment, the first node is one aircraft or ship.

As one embodiment, the first node is one mobile phone or vehicle-mounted terminal.

As one embodiment, the first node is one relay UE and/or U2N remote UE.

As one embodiment, the first node is one Internet of Things terminal or industrial Internet of Things terminal.

As one embodiment, the first node is one device supporting low-latency and high-reliability transmission.

As one embodiment, the first node is a secondary link communication node.

As one embodiment, the first receiver 1001 comprises at least one of an antenna 452, a receiving device 454, a receiving processor 456, a multi-antenna receiving processor 458, a controller/processor 459, a memory 460, or a data source 467 in Embodiment 4.

As one embodiment, the first transmitter 1002 comprises at least one of the antenna 452, the transmitter 454, the transmit processor 468, the multi-antenna transmit processor 457, the controller/processor 459, the memory 460, or the data source 467 in Embodiment 4.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals and UE in the present application include but are not limited to drones, communication modules on drones, remote-controlled aircrafts, aircrafts, small aircrafts, mobile phones, tablet computers, notebooks, vehicle-mounted communication devices, wireless sensors, Internet cards, Internet of Things terminals, RFID terminals, NB-IoT terminals, MTC (Machine Type Communication) terminals, eMTC (enhanced MTC) terminals, data cards, Internet cards, vehicle-mounted communication devices, low-cost mobile phones, low-cost tablet computers, satellite communication devices, ship communication devices, NTN user equipment and other wireless communication devices. Base stations or system devices in the present application include but are not limited to macrocell base stations, microcell base stations, femtocells, relay base stations, gNBs (NR nodes B), TRPs (Transmitter Receiver Points), NTN base stations, satellite devices, flight platform devices and other wireless communication devices.

The present disclosure can be implemented in other specified forms without departing from its core or basic features. Therefore, the embodiments disclosed at present should be regarded as descriptive rather than restrictive in any case. The scope of the invention is determined by the appended claims rather than the previous description, and all changes within their equivalent meanings and areas are deemed to be comprised therein.

## Claims

1. A first node for wireless communication, comprising:
a first receiver, receiving at least one RRC information block, each RRC information block amongst the at least one RRC (Radio Resource Control) information block being used for configuring one cell group, and the application of any RRC information block amongst the at least one RRC information block depending on receiving a signaling other than the at least one RRC information block;
the first receiver, receiving a second signaling, the second signaling being a signaling of a protocol layer below an RRC layer; in response to receiving the second signaling, applying a first RRC information block, the second signaling indicating the first RRC information block amongst the at least one RRC information block, and the application of the first RRC information block not comprising random access; and accompanied by the reception of the second signaling, starting a first timer, a stopping of the first timer depending on receiving first information, the first information being generated by the protocol layer below the RRC layer, and the reception of the first information being used for determining that the first RRC information block is successfully applied,
wherein the expiration of the first timer is used for determining that the first RRC information block fails to be applied successfully.

2. The first node according to claim 1, comprising:
a first transmitter, sending a first measurement result, the first measurement result being an L1 (Layer 1) measurement result; and
the first transmitter, sending first acknowledgment information, the first acknowledgment information being used for indicating that the first RRC information block is applied,
wherein the behavior of sending the first measurement result is performed before receiving the second signaling, and the behavior of sending the first acknowledgment information is performed after receiving the second signaling.

3. The first node according to claim 1 or 2, comprising:
the first receiver, receiving a third signaling, the third signaling being a signaling of the protocol layer below the RRC layer; in response to receiving the third signaling, applying a second RRC information block, the third signaling indicating the second RRC information block amongst the at least one RRC information block, and the second RRC information block comprising triggering random access; accompanied by the reception of the third signaling, starting the first timer; and in response to successful completion of random access to a cell in the cell group configured by the second RRC information block, stopping the first timer.

4. The first node according to any one of claims 1 to 3, wherein,
the expiration of the first timer does not trigger RRC reestablishment.

5. The first node according to any one of claims 1 to 3, wherein,
the at least one RRC information block is used for indicating whether the expiration of the first timer triggers RRC reestablishment.

6. The first node according to any one of claims 1 to 5, wherein,
in response to the expiration of the first timer, a first processor applies one RRC information block of the at least one RRC information block to start the first timer.

7. The first node according to any one of claims 1 to 5, wherein,
in response to the expiration of the first timer, the first processor falls back to a configuration before applying the first RRC information block.

8. The first node according to claim 7, wherein
the phrase "falling back to a configuration before applying the first RRC information block" does not comprise releasing a signaling radio bearer, discarding keys, or falling back to a previous PDCP (Packet Data Convergence Protocol) state variable for a DRB (Data Radio Bearer), and the phrase "falling back to a configuration before applying the first RRC information block" comprises at least partially resetting MAC.

9. The first node according to claim 7 or 8, wherein,
the phrase "falling back to a configuration before applying the first RRC information block" does not comprise releasing or reestablishing an RLC entity.

10. The first node according to any one of claims 1 to 9, wherein,
the first information is a physical layer signal.

11. The first node according to any one of claims 1 to 10, wherein,
the first information is or comprises a signal on a PDCCH (Physical Downlink Control Channel).

12. The first node according to any one of claims 1 to 11, wherein,
the first information occupies 1 bit.

13. The first node according to any one of claims 1 to 12, wherein,
the first information is or comprises an HARQ (Hybrid Automatic Repeat reQuest ACK).

14. The first node according to claim 13, wherein,
the HARQ ACK is for a signal sent by the first node.

15. A method used in a first node for wireless communication, comprising:
receiving at least one RRC information block, each RRC information block amongst the at least one RRC information block being used for configuring one cell group, and the application of any RRC information block amongst the at least one RRC information block depending on receiving a signaling other than the at least one RRC information block;
receiving a second signaling, the second signaling being a signaling of a protocol layer below an RRC layer; in response to receiving the second signaling, applying a first RRC information block, the second signaling indicating the first RRC information block amongst the at least one RRC information block, and the application of the first RRC information block not comprising random access; and accompanied by the reception of the second signaling, starting a first timer, a stopping of the first timer depending on receiving first information, the first information being generated by the protocol layer below the RRC layer, and the reception of the first information being used for determining that the first RRC information block is successfully applied,
wherein the expiration of the first timer is used for determining that the first RRC information block fails to be applied successfully.
